# EUROPEAN PATENT SPECIFICATION

(11) **EP 1 318 712 B1**
(45) Date of publication and mention of the grant of the patent: **12.11.2008**
(21) Application number: 01982924.1
(22) Date of filing: 18.09.2001
(51) Int. Cl.: A01G 9/12

(54) **SUSPENSION HOOK**
AUFHÄNGEHAKEN
CROCHET DE SUSPENSION

(30) Priority: 18.09.2000 NL 1016210
(43) Date of publication of application: 18.06.2003
(73) Proprietor: CORSA BEHEER B.V., NL-2678 BZ De Lier (NL)
(72) Inventor: SCHOENMAKER, Karel, Jan, 2678 TE De Lier (NL); PRINS, Adrianus, 2678 BZ De Lier (NL); PRINS, Reinder, Pier, 2678 PL De Lier (NL)
(74) Representative: Jorritsma, Ruurd
(86) International application number: PCT/NL2001/000692
(87) International publication number: WO 2002/021904

(56) References cited:
- EP-A- 0 001 703
- EP-A- 0 343 285
- WO-A-99/62327
- FR-A- 2 743 258
- NL-A- 8 202 226
- NL-A- 8 702 028

## Description

The present invention relates to a suspension hook for plants, comprising a store for plant cord, having a support for a reel of cord, a suspension part for securing to a horizontal cable or the like.

A suspension hook of this type is known from EP 0 343 285 A1. This document describes a complicated structure which is produced by injection moulding and is provided with a receptacle-like body in which a bobbin of cord can be accommodated.

This construction seeks to eliminate the drawbacks of the prior art relating to the storage of plant cord. In the prior art, the suspension hook for plants comprised a bent metal wire provided with two slightly depressed parts which lie opposite one another and between which the wire was wound. Although a hook of this type can be produced at particularly low cost, it has the drawback that the cord has to be fitted separately. This does not generally take place at the grower's premises and is a labour-intensive operation. During the growing process, increasing amounts of cord are unwound from the hook. After harvesting, the cord is removed and has to be wound back up if the hook is to be reused. If this takes place elsewhere, there is a risk of microorganisms and germs being spread.

To solve this problem, EP 0 343 285 A1 uses a separate receptacle-like body in which a small bobbin of cord can be placed. This solves the problems relating to winding up the cord, since a small bobbin of cord of this type can be produced mechanically. However, a structure of this type is particularly complicated and is correspondingly expensive, and for this reason it is not in use or is scarcely in use.

The object of the present invention is to provide a suspension hook which combines firstly the simplicity of the suspension hook made from wire which is known in the prior art with the advantages achieved by EP 0 343 285 A1.

In a suspension hook as described above, this object is achieved in that, in the position of use, said support is situated near the bottom of the said suspension hook and the said suspension hook is provided with recesses/receptacles for the said, cord which are situated above said support and act as a cord lock.

According to the invention, the support for the reel of cord is situated in the vicinity of the bottom of the suspension hook, and the wire lock is arranged above it.

According to the invention, cord is supplied in reel form and is attached to the suspension hook in a particularly simple manner with a support which extends through the interior of a reel/bobbin or the like.

The suspension hook according to the invention can be used to grow any type of plant, such as tomatoes.

This support can be produced in any way which is known in the prior art. It is preferably integral with the remainder of the suspension hook, and this design can be produced particularly easily by stamping material in sheet form. It has been found that this provides sufficient strength. However, it should be understood that the suspension hook can also be produced by injection moulding or from metal material. Use of plastic has the advantage of being easy to be recycled, while also being easy to reuse without the risk of rusting or the like.

According to the invention, there is a locking system for the plant cord. This makes it possible to prevent the reel of cord from unwinding undesirably. A locking system of this type may comprise any design which is known in the prior art and preferably comprises an opening through which the plant cord can be threaded, finishing off with a notch or recess in which pieces of cord cross one another, thus locking together. According to the invention, locking is preferably effected by the weight of the plant hanging from the cord, i.e. has a vertical component. This contrasts with designs according to the prior art, in which locking takes place in the horizontal direction. When choosing the size of the opening, firstly the strength of the suspension hook and secondly the desire to reduce the restriction to light transmission through the hook as far as possible are of importance. According to an advantageous embodiment of the invention, the opening is substantially oval, so that the cord, as it were, is automatically pressed together.

According to an advantageous embodiment of the invention, the hook may be provided with an electronic sensor means which, optionally in combination with electronic processing means, such as a chip, detects information about the plant or growing conditions and, if appropriate, transmits this information by wireless means to a central processing unit. On this basis, it is possible to determine optimum growing conditions for the plant and/or to determine which plant provides an optimum yield. It will be understood that use of an electronic sensor is possible with any tomato hook which is known in the prior art and is not restricted to the design of the suspension hook according to the invention which has been described above. For example, it is possible to fit a chip in the plant, recording flows of liquids and transmitting the signal derived therefrom to a processing unit arranged at the bottom of the suspension hook. This transmission may take place by wireless means, but it is also possible to incorporate an electrical conductor in the cord from which the plant is hanging.

It is then possible for the signal which has been processed in this way either to be passed on directly to a central processing unit or to be stored in a memory, which is likewise located in the suspension hook in question and to read this memory when carrying out a treatment on the plant.

The cord may comprise any type of cord which is known in the prior art, such as an environmentally friendly type of cord. The dimensions of the bobbin will, of course, be selected accordingly. The bobbin is preferably provided with a cylindrical core without flanges, and the cord, with a maximum length of approximately 15 m, is wound crosswise onto the bobbin. By using a relatively small bobbin, it is possible to limit the loss of light to the plant as much as possible.

For applications in which there is a considerable displacement of cord, it may be desirable for the construction to be designed in such a manner that there is as little braking of the cord as possible. In this case, however, a particular design is provided, which allows the braking of the cord with respect to the suspension hook to be altered during operation. One example of a design of this type is a push-button or other adjustable part which makes it possible to generate friction between the suspension hook and the cord and which can be actuated temporarily, i.e. can be changed as desired. The support according to the present invention preferably comprises a stub-like part.

The invention also relates to a suspension hook/plant cord assembly. In this case, the suspension hook is designed as described above, and the plant cord is wound onto a bobbin which is secured to the support of the suspension hook.

The invention will be explained in more detail below with reference to exemplary embodiments illustrated in the drawing, in which:
Fig. 1 shows a first embodiment of the present invention; and
Fig. 2 shows a second embodiment.

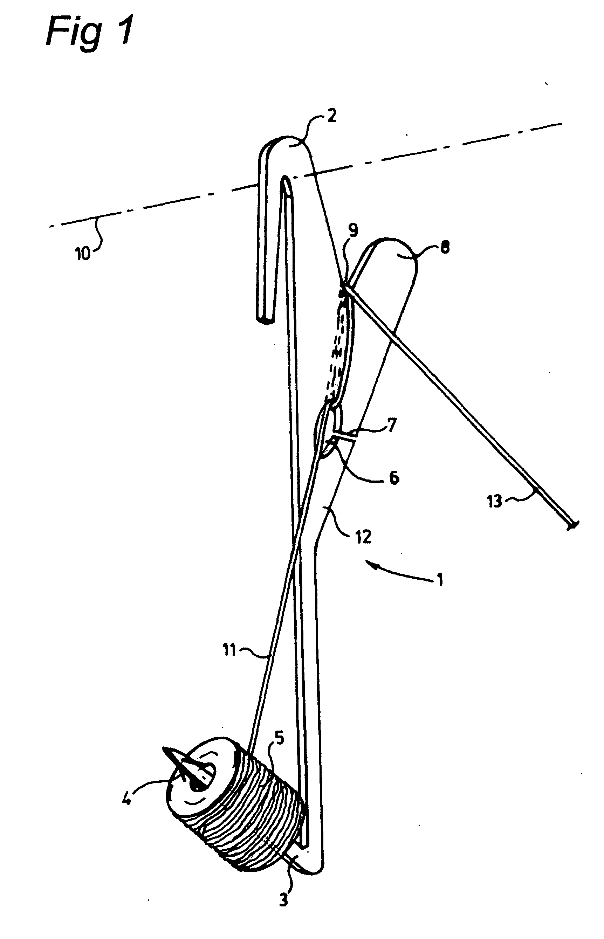

A first embodiment of the suspension hook according to the invention is denoted overall by 1 in Fig. 1. In the example, this hook comprises a flat piece of material which is preferably produced by stamping. The arrangement preferably consists of plastic material, more particularly of a transparent plastic material, so that the light output in, for example, a greenhouse is not restricted in any way. The suspension hook 1 according to the invention can be secured to a suspension cable 10 via suspension part 2 in the customary way. Cables of this type extend, for example, through greenhouses.

The suspension hook 1 comprises a body 12 in which there is an opening 6. This opening is accessible from the surrounding areas via inlet 7. Body 12 is provided with a projecting part which, together with the suspension part, delimits a notch 9.

Body 12 may be provided with an electronic sensor (not shown) which is optionally coupled to electronic processing means, such as a chip. In this way, it is possible to measure the individual conditions of the plant in question and to transmit the corresponding data, optionally directly and optionally by wireless means, to a central processing unit. In this way, the individual growing behaviour of the plant suspended from the hook in question can be determined and recorded, and on this basis the optimum position of the plant or the optimum plant from a series of plants can be determined. It will be understood that use of a sensor of this type, optionally in combination with electronic processing, is possible with any plant hook which is known in the prior art.

At the bottom, the body 12 is provided with a stub 3, which is dimensioned in such a manner that a bobbin of plant cord, which is denoted by 5, can be pushed onto it. It can be prevented from coming off by, if appropriate, fitting barbs 4. The plant cord is denoted by 11 and extends from bobbin 5 through opening 6. It can be introduced into opening 6 either by threading or by latching it in via inlet 7. The cord then extends over notch 9. In principle, this provides sufficient locking to suspend a plant, such as a tomato plant, from the hanging part of the plant cord, which is denoted by 13. Further locking is possible by passing that part of the plant cord which extends from notch 9 through opening 6 again and guiding it back through notch 9. This is shown in the figure.

According to the present invention, the plant cord is supplied from below, through the V-shaped notch and then back to the opening. Pressure in the notch applies a pinching action to the plant cord below. This is a particularly simple method of locking.

The design described above offers considerable advantages over that which is known in the prior art. The small bobbins 5 of plant cord of a desired length can be produced automatically in the factory. There is no need for winding by hand. The time-consuming transport of the hooks between grower and winder, if this operation is tendered out, is also eliminated. This also eliminates the problem of the awkwardness of packaging.

The drawback of removing remainders of cord from the hook is also eliminated. By simply removing the bobbin 5, all the cord is removed. Organization is also considerably simplified, which entails further price benefits. Cord 5 preferably comprises a core which is designed as a cylinder and does not have any end flanges. Only a limited length of plant cord is required, and more particularly at most 15 metres are used. The plant cord is preferably wound up crosswise, so that it is not necessary to use flanges or the like, with the result that the cost price of the core can be limited. The plant cord may comprise any cord which is known in the prior art; a multifilament polypropylene cord is preferred. More particularly, the polypropylene cord is present in net form.

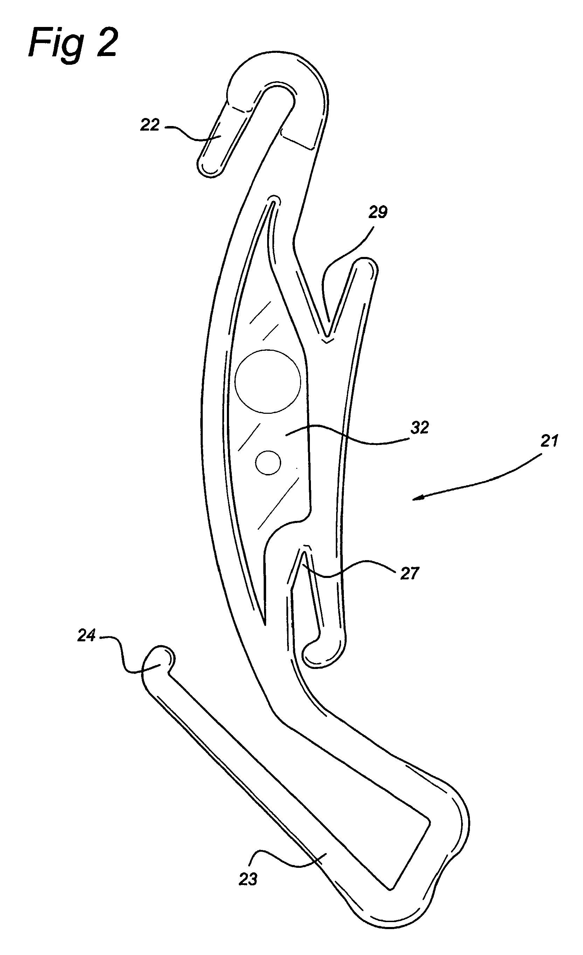

A further embodiment of the device is denoted overall by 21 in Fig. 2. The part shown here is produced by injection moulding. 22 denotes the suspension part, while the body of the suspension hook bears reference numeral 32. The attachment stub for the bobbin (not shown) is denoted by 23. The cord is in this case locked by the recesses 29 and 27, between which the cord can be clamped. Stub 23 is provided with a retaining projection 24 for holding the reel of cord in place.

Although the invention has been described above on the basis of preferred embodiments, it will be understood by the average person skilled in the art that numerous modifications are possible, and these modifications will be obvious on reading the above and lie within the scope of the appended claims.

## Claims

1. Suspension hook for plants, comprising a store (5) for plant cord, having a support (3) for a reel of cord, a suspension part (2) for securing to a horizontal cable (10) or the like, wherein in the position of use, said support (3) is situated near the bottom of said suspension hook, **characterised in that** the said suspension hook is provided with recesses/receptacles for the said cord, which are situated above the said support and act as a cord lock having a vertical component.

2. Suspension hook according to the preceding Claim 1, in which said hook comprises a substantially flat body.

3. Suspension hook according to one of the preceding claims, comprising a plastic material.

4. Suspension hook according to one of Claims 2 or 3, in which said support is provided with locking means for a reel of cord.

5. Suspension hook according to one of the preceding claims, comprising a transparent plastic material.

6. Suspension hook according to one of the preceding claims, provided with an electronic sensor.

7. Suspension hook according to one of the preceding claims, comprising means which act on the cord and can be switched on.

8. Suspension hook/plant cord assembly, in which said suspension hook comprises a hook according to one of the preceding claims wherein recesses/receptacles comprise a notch (9) and said plant cord is wound onto a bobbin (5) which is placed onto said support, said plant cord being wounded two times over said notch.

9. Combination comprising a suspension hook for plants, comprising a store (5) for plant cord, having a support (3) for a reel of cord, a suspension part (2) for securing to a horizontal cable (10) or the like, wherein in the position of use, said support (3) is situated near the bottom of said suspension hook, the said suspension hook being provided with recesses/receptacles for the said cord, which are situated above the said support and act as a cord lock having a vertical component and a reel of cord provided with cord to be used in combination with said suspension hook.

10. Combination according to Claim 9, comprising a core onto which said plant cord is wound.

11. Combination according to one of Claims 9-10, comprising less than 15 meters of cord.

12. Combination according to one of Claims 9-11, in which said cord is wound crosswise onto the said reel.

## Patentansprüche

1. Aufhängehaken für Pflanzen, umfassend ein Vorratsmittel (5) für Pflanzenschnur, der einen Träger (3) für eine Schnurrolle, einen Aufhängeteil (2) zur Befestigung an einem horizontalen Kabel (10) oder dergleichen hat, wobei sich der Träger (3) in der Verwendungsposition nahe dem Boden des Aufhängehakens befindet, **dadurch gekennzeichnet, dass** der Aufhängehaken mit Vertiefungen/Aufnahmemitteln für die Schnur ausgestattet ist, welche sich oberhalb des Trägers befinden und als Schnurarretierung, die eine vertikale Komponente hat, wirken.

2. Aufhängehaken nach dem vorangehenden Anspruch 1, bei dem der Haken im Wesentlichen einen flachen Körper umfasst.

3. Aufhängehaken nach einem dem vorangehenden Ansprüche, der ein Kunststoffmaterial umfasst.

4. Aufhängehaken nach einem dem Ansprüche 2 oder 3, wobei der Träger mit Blockierungsmitteln für eine Schnurrolle ausgestattet ist.

5. Aufhängehaken nach einem dem vorangehenden Ansprüche, der ein transparentes Kunststoffmaterial umfasst.

6. Aufhängehaken nach einem dem vorangehenden Ansprüche, der mit einem elektronischen Sensor ausgestattet ist.

7. Aufhängehaken nach einem dem vorangehenden Ansprüche, der Mittel umfasst, die auf die Schnur wirken und die eingeschaltet werden können.

8. Aufhängehaken/Pflanzenschnur-Anordnung in der der Aufhängehaken einen Haken nach einem der vorangehenden Ansprüche umfasst, in dem Vertiefungen/Aufnahmemittel eine Kerbe (9) umfassen und die Pflanzenschnur auf eine Spule (5) aufgewickelt ist, die auf dem Träger angeordnet ist, wobei die Pflanzenschnur zweimal über die Kerbe gewickelt ist.

9. Kombination, umfassend einen Aufhängehaken für Pflanzen, umfassend ein Vorratsmittel (5) für Pflanzenschnur, der einen Träger (3) für eine Schnurrolle, einen Aufhängeteil (2) zur Befestigung an einem horizontalen Kabel (10) oder dergleichen hat, wobei sich der Träger (3) in der Verwendungsposition nahe dem Boden des Aufhängehakens befindet, der Aufhängehaken mit Vertiefungen/Aufnahmitteln für die Schnur, die sich oberhalb des Trägers befinden und als Schnurarretierung, welche eine vertikale Komponente hat, wirken, und mit einer Schnurrolle, die mit der Schnur ausgestattet ist, die in Kombination mit dem Aufhängehaken zu verwenden ist, ausgestattet ist.

10. Kombination nach Anspruch 9, die einen Kern umfasst, auf den die Pflanzenschnur aufgewickelt ist.

11. Kombination nach einem der Ansprüche 9-10, die weniger als 15 Meter Schnur umfasst.

12. Kombination nach einem der Ansprüche 9-11, bei der die Schnur kreuzweise auf die Rolle aufgewickelt ist.

## Revendications

1. Crochet de suspension pour plantes, comprenant un magasin (5) pour cordon de plante, ayant un support (3) pour un dévidoir de cordon, une partie de suspension (2) pour fixation à un câble horizontal (10) ou un élément similaire, dans lequel à la position d'utilisation, ledit support (3) est situé à proximité du bas dudit crochet de suspension, **caractérisé en ce que** ledit crochet de suspension est muni de renfoncements/réceptacles pour ledit cordon, qui sont situés au-dessus dudit support et agissent en tant que verrouillage de cordon ayant un composant vertical.

2. Crochet de suspension selon la revendication 1, dans lequel ledit crochet comprend un corps sensiblement plat.

3. Crochet de suspension selon l'une quelconque des revendications précédentes, comprenant un matériau en plastique.

4. Crochet de suspension selon l'une quelconque des revendications 2 et 3, dans lequel ledit support est muni de moyens de verrouillage pour un dévidoir de cordon.

5. Crochet de suspension selon l'une quelconque des revendications précédentes, comprenant un matériau plastique transparent.

6. Crochet de suspension selon l'une quelconque des revendications précédentes, muni d'un capteur électronique.

7. Crochet de suspension selon l'une quelconque des revendications précédentes, comprenant des moyens qui agissent sur le cordon et qui peuvent être actionnés.

8. Ensemble de crochet de suspension/cordon de plante, dans lequel ledit crochet de suspension comprend un crochet selon l'une quelconque des revendications précédentes dans lequel des renfoncements/réceptacles comprennent une encoche (9) et ledit cordon de plante est enroulé sur une bobine (5) qui est placée sur ledit support, ledit cordon de plante étant enroulé deux fois sur ladite encoche.

9. Combinaison comprenant un crochet de suspension pour plantes, comprenant un magasin (5) pour cordon de plante, ayant un support (3) pour un dévidoir de cordon, une partie de suspension (2) pour fixation à un câble horizontal (10) ou un élément similaire, dans laquelle à la position d'utilisation, ledit support (3) est situé à proximité du bas dudit crochet de suspension, ledit crochet de suspension étant muni de renfoncements/réceptacles pour ledit cordon, qui sont situés au-dessus dudit support et agissent en tant que verrouillage de cordon ayant un composant vertical et un dévidoir de cordon muni de cordon à utiliser en combinaison avec ledit crochet de suspension.

10. Combinaison selon la revendication 9, comprenant un noyau sur lequel ledit cordon de plante est enroulé.

11. Combinaison selon l'une quelconque des revendications 9 à 10, comprenant moins de 15 mètres de cordon.

12. Combinaison selon l'une quelconque des revendications 9 à 11, dans lequel ledit cordon est enroulé en travers sur ledit dévidoir.
